Europäisches Patentamt

European Patent Office

Office européen des brevets

(19)

(11) Publication number: **0 042 691**
**B1**

(12) **EUROPEAN PATENT SPECIFICATION**

(45) Date of publication of patent specification: **03.04.85**  (51) Int. Cl.⁴: **G 01 P 3/489**

(21) Application number: **81302564.0**

(22) Date of filing: **09.06.81**

(54) **Digital indication type speedometer.**

(30) Priority: **23.06.80 JP 84854/80**

(43) Date of publication of application:
**30.12.81 Bulletin 81/52**

(45) Publication of the grant of the patent:
**03.04.85 Bulletin 85/14**

(84) Designated Contracting States:
**DE FR GB**

(56) References cited:
**EP-A-0 031 702**
**EP-A-0 031 703**
**GB-A-2 010 033**
**US-A-3 735 387**
**US-A-4 007 419**

(73) Proprietor: **TOYOTA JIDOSHA KABUSHIKI KAISHA**
**1, Toyota-cho Toyota-shi**
**Aichi-ken 471 (JP)**

(72) Inventor: **Hayashi, Kunihisa**
**1132-8, Higashiyamacho 4 chome**
**Toyota Aichi (JP)**
Inventor: **Moriyama, Masakuzu**
**10, Toyotacho**
**Toyota Aichi (JP)**

(74) Representative: **Burnside, Michael et al**
**c/o Michael Burnside & Partners 2 Serjeants' Inn**
**Fleet Street**
**London EC4Y 1HL (GB)**

Courier Press, Leamington Spa, England.

EP 0 042 691 B1

## Description

The present invention relates to digital indication type speedometers, and particularly to improvements in a digital indication type speedometer comprising: a gate circuit for being opened for a given gate time at each predetermined time; a speed counter for counting speed pulses emitted in proportion to a vehicle speed for a given gate time, during which the gate circuit is opened; an indication register for latching an output from the speed counter until the succeeding counting is completed; and an indicator for digitally indicating a value latched in the indication register.

In general, a digital indication type speedometer for digitally indicating a running speed of a vehicle or the like comprises: a gate circuit for being opened for a given gate time at each predetermined time; a speed counter for counting speed pulses emitted in proportion to a vehicle speed through the rotation of a propeller shaft, wheel or the like for a given gate time, during which the gate circuit is opened; an indication register for latching an output from the speed counter until the succeeding counting is completed; and an indicator for digitally indicating the value latched by the indication register. This digital indication type speedometer has such a characteristic feature that the vehicle speed is constantly digitally indicated by the indicator. However, with this type of speedometer, heretofore, the gate time of the gate circuit has been made on irrespective of the presence of the speed pulses, particularly, in a running condition of the vehicle at a constant speed, the timing of opening of the gate circuit and the timing of the speed pulse have been shifted from each other, whereby dispersions are resulted in the values counted by the speed counter, thereby presenting such a disadvantage that the speed indication in the indicator flickers.

To obviate the above described disadvantage, there has been proposed to provide a hysteresis processing circuit, in which comparison is made between the output from the speed counter and the value latched by the indication register, and, only when a difference therebetween is out of the range of allowance, the value latched in the indication register is rewritten to a value commensurate to the output from the speed counter. However, only the provision of this hysteresis circuit could not completely obviate the abovedescribed disadvantage.

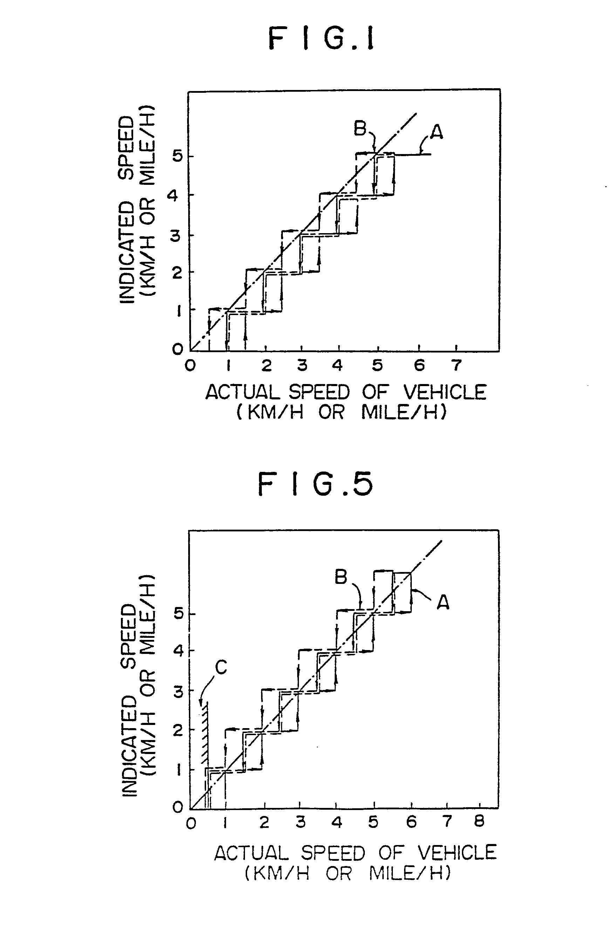

There may be proposed that, with or without this hysteresis circuit, the gate time of the gate circuit is made on in synchronism with the speed pulse. However, if a first pulse of the speed pulses is used for the synchronism with the gate circuit, one pulse is decreased from the number of pulses counted by the speed counter, whereby there may occur a possibility of causing a steady offset. More specifically, in a digital indication type speedometer wherein the first pulse of the speed pulses is used for the synchronism with the gate circuit, if one pulse of the speed pulses is made to correspond to 0.5 km/h or 0.5 mile /h (0.8 km/h) of the actual speed of the vehicle and a hysteresis of 1 km/h or 1 mile/h (1.6 km/h) is given in rewriting the indication register, then the relationship between the actual speed of the vehicle and the indicated speed is indicated by solid lines A (when the lowest bit of the indication register is "1") or indicated by broken lines B (when the lowest bit of the indication register is "0") in Fig. 1. In either case, the indicated speed is lower than the actual speed of the vehicle.

In order to obviate the disadvantages as described above, it is necessary to add a value of speed corresponding to one pulse to the value counted by the speed counter, which, however, would entail a problem of complicating the circuit arrangement.

US—A—4,007,419 and European Patent Applications Nos. EP—A1—0,031,702 and EP—A1—0,031,703 disclose digital indication type speedometers which have the features of the preamble of Claims 1.

The present invention has been developed to obviate the abovedescribed disadvantages and has as its object the provision of a digital indication type speedometer in which, while no steady offset is generated and the circuit arrangement is not complicated, the flickering of the indication during running of the vehicle at a constant speed is decreased.

According to the present invention, there is provided a digital indication type speedometer for digitally indicating a speed of a vehicle comprising:—

a gate circuit which can be opened for a given gate time (T) at a predetermined time which is synchronized with a speed pulse of a series of speed pulses, the frequency of which is proportional to the speed of the vehicle;

a repetitively counting speed counter, the output value of which at the end of each gate time (T) corresponds to the number of the speed pulses delivered within that gate time (T);

an indication register, connected to the output of the speed counter for latching a value indicative of the vehicle speed;

a digital indicator for displaying the value latched in the indication register;

characterised in that the gate circuit is opened in synchronism with the leading edge of the speed pulse and in that the trailing edges of the speed pulses are counted by said speed counter.

The abovementioned features and object of the present invention will become more apparent by reference to the following description taken in conjunction with the accompanying drawings, wherein like reference numerals denote like elements, and in which:

Fig. 1 is a chart showing an example of the relationship between the actual speed of the vehicle and the indicated speed in the conventional digital indication type speedometer;

Fig. 2 is a block diagram showing the general arrangement of an embodiment of the digital indication type speedometer according to the present invention;

Fig. 3 is a block diagram showing an example of the arrangement of the hysteresis processing circuit in the abovementioned embodiment;

Fig. 4 is a chart showing performance waveshapes in the respective portions of the abovementioned embodiment; and

Fig. 5 is a chart showing the relationship between the actual speed of the vehicle and the indicated speed in the abovementioned embodiment.

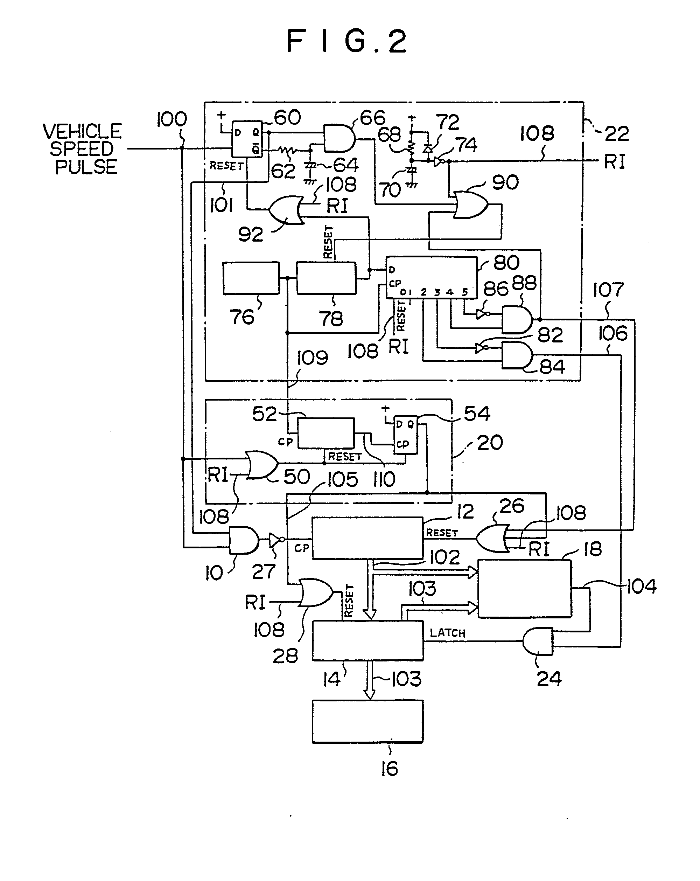

Description will hereunder be given of an embodiment of the present invention with reference to the drawings. As shown in Fig. 2, in this embodiment, a digital indication type speedometer comprises: an AND gate 10 for being opened for a given gate time T at each predetermined time in response to a gate signal 101; a speed counter 12 for counting speed pulses 100 emitted in proportion to a vehicle speed through the rotation of the wheel for a given gate time T, during which the AND gate 10 is opened; an indication register 14 for latching an indicated value commensurate to an output signal 102 (counted value) from the speed counter 12 until the succeeding counting is completed; an indicator 16 comprising any one of an indicating fluorescent tube, a plasma display, a liquid crystal, a luminescent diode and the like for indicating a value 103 latched in the indication register 14; a hysteresis processing circuit 18 for emitting a difference presence signal 104 for rewriting a value 103 latched by the indication register 14 to a value commensurate to an output signal 102 from the speed counter 12, only when a difference between the output signal 102 and the value 103 is out of the range of allowance, e.g. 1 km/h or 1 mile/h (1.6 km/h), in the case of comparison therebetween; a zero indication discriminating circuit 20 for emitting a zero indication signal 105 to forcibly set the values latched in the indication register 14 and counted by the speed counter 12 to zero when the emitting interval of the speed pulses 100 exceeds a predetermined period of time (0.28 sec., for example), so that a steady error between the output from the speed counter 12 and the value indicated by the indicator 16 can be avoided when the actual speed of the vehicle is 0 km/h or 0 mile/h (0 km/h), and the indicated value can be quickly set at zero when the vehicle is stopped in running; a timing pulse generating circuit 22 for feeding a given gate signal 101 to determine the counting time of the speed counter 12, the gate-on timing of which is synchonized with a rise of the speed pulse 100, to the AND gate 10, further feeding a latch signal 106 to the indication register 14 through an AND gate 24 at a timing suitable for feeding a counted value of the speed counter 12 to the indication register 14 upon counting, further feeding a reset signal 107 for restoring the counted value of the speed counter 12 to zero to the speed counter 12 through an OR gate 26 upon feeding the above-described counted value, and further feeding an initial reference signal (RI) 108 for initial reference when the power source is turned on; an inverter 27 for inverting an output from the AND gate 10 and feeding same to the speed counter 12; and OR gates 28 and 26 for feeding the zero indication signal 105 from the zero indication discriminating circuit 20 together with the initial reference signal 108 to the indication register 14 and a reset terminal of the speed counter 12.

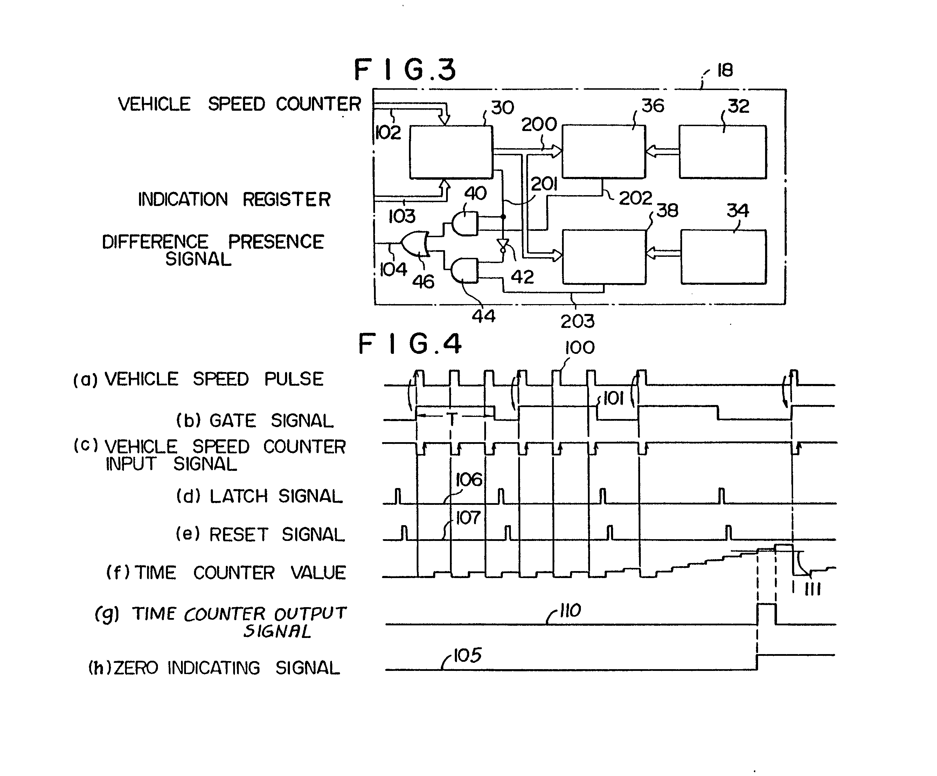

As shown in Fig. 3 for example, the hysteresis processing circuit 18 comprises: a digital subtraction circuit 30 for calculating a difference between the output signal 102 from the speed counter 12 and the value latched in the indication register 14; a first digital reference circuit 32 for digitally setting a reference value on the plus side of hysteresis, e.g., +1 km/h or +1 mile (1.6 km)/h; a second reference circuit 34 for digitally setting a reference value on the minus side of hysteresis, e.g., −1 km/h or −1 mile (1.6 km)/h; a first comparison circuit 36 for emitting an output signal 202 in response to an output 200 obtained through subtraction in the digital subtraction circuit 30 when the output from the speed counter 12 becomes larger than the value latched in the indication register 14 exceeding the reference value on the plus side of the first reference circuit 32; a second comparison circuit 38 for emitting an output signal 203 in response to an output 200 obtained through subtraction in the digital subtraction circuit 30 when the output from the speed counter 12 becomes smaller than the value latched in the indication register 14 exceeding the reference value on the minus side of hysteresis of the second reference circuit 34; a first AND gate 40 for being opened to pass the output signal 202 from the first comparison circuit 36 when "1" is indicated by a plus-minus signal 201, which, depending upon plus or minus of the result of subtraction in the digital subtraction circuit 30, indicates "1" when the result is plus or "0" when the result is minus; a second AND gate 44 for being opened to pass the output signal 203 from the second comparison circuit 38 when the result of subtraction is minus, when "0" is indicated by the plus-minus signal 201 inverted in the inverter 203; and an OR gate for emitting a logical sum between the first AND gate 40 and the second AND gate 44 as a difference presence signal 104.

Consequently, this hysteresis processing circuit 18 is adapted to obtain a difference between the output signal 102 from the speed counter 12 and the value 103 latched in the indication register 14 and indicate the difference presence signal 104 as "1" when the difference is out of the range of allowance. More specifically, the value 103 latched in the indication register 14 is subtracted from the output signal 102 of the speed counter 12 in the digital subtraction circuit 30, the result of subtraction is compared with the reference value on the plus side of hysteresis being set in the first digital reference circuit 32, e.g., +1 km/h or +1 mile (1.6 km)/h, and, when the result of subtraction is larger than the reference value, the output signal 202 from the comparison circuit 36 is indicated as "1". In the second comparison circuit 38, the result of subtraction from the digital subtraction circuit 30 is compared with the reference value on the minus side of hysteresis being set in the second digital reference circuit 34, e.g., −1 km/h or −1 mile (1.6 km)/h, and, when the result of subtraction is smaller than the reference value, the output signal 203 is indicated as "1". The first and second AND gates 40 and 44 are provided for selecting either one of the comparison circuit to be used depending upon plus or minus of the output from the digital subtraction circuit 30, when the result of subtraction from the digital subtraction circuit 30 is of plus and the plus-minus signal is indicated as "1", the first AND gate 40 is opened, and, when the result of subtraction from the digital subtraction circuit 30 is of minus and the plus-minus signal 201 is indicated as "0", the second AND gate 44 is opened. The OR gate 46 is adapted to indicate the difference presence signal 104 as "1" when an output is emitted from either the first AND gate 40 or the second AND gate 44.

As shown in Fig. 2, the zero indication discriminating circuit 20 comprises: an OR gate 50 for emitting a logical sum between the speed pulse 100 and the initial reference signal 108 from the timing pulse generating circuit 22; a time counter 52 for counting the emitting intervals of the speed pulses 100 in response to a clock pulse signal 109 from the timing pulse generating circuit 22 until it is reset by an output from the OR gate 50, and for feeding an output signal 110 to a bistable multivibrator 54 when a time count value of the time counter 52 exceeds a predetermined value; and the bistable multivibrator 54 that it is reset by an output signal from the OR gate 50 for feeding the zero indication signal 105 to the OR gates 28 and 26 when a time counter value 110 from the time counter 52 exceeds a predetermined value.

Consequently, in this zero indication discriminating circuit 20, when the emitting interval of the speed pulse 100 exceeds the time being set by the time counter 52 and the bistable multivibrator 54, e.g., 0.28 sec., the zero indication signal 105 from the bistable multivibrator 54 is indicated as "1" and the indication register 14 and the speed counter 12 are reset through the OR gates 28 and 26 to forcibly set their values to 0.

As shown in Fig. 2, the timing pulse generating circuit 22 comprises: a bistable multivibrator 60 for receiving the speed pulses 100; an AND gate 66, to which an output of a Q terminal of the bistable multivibrator 60 is directly fed and an output of a Q̄ terminal of the bistable multivibrator 60 is fed through a resistor 62 and a capacitor 64; a resistor 68, a capacitor 70, a diode 72 and an inverter 74 for emitting the first reference signal 108 when the power is turned on; an oscillator 76 for emitting the clock pulse signal 109; a shift register 80 in which an output from the oscillator 76 is directly fed to a CP terminal thereof and same is fed to a D terminal thereof through a frequency dividing circuit 78; an AND gate 84 for receiving an output from the shift register 80 directly and through an inverter 82 and emitting a latch signal 106; an AND gate 88 for receiving an output from the shift register 80 directly and through an inverter 86 and emitting a reset signal 107 at a timing slightly behind the latch signal 106; a three input OR gate 90 for receiving the reset signal 107 from the AND gate 88, an output from the AND gate 66 and the initial reference signal 108 from the inverter 74 and feeding a reset signal to the frequency dividing circuit 78; and an OR gate 92 for receiving the initial reference signal 108 from the inverter 74 and an output from the frequency dividing circuit 78, and feeding a reset signal to the bistable multivibrator 60.

Description will hereunder be given of action with reference to Fig. 4. The speed pulses 100 generated in proportion to the speed of the vehicle through the rotation of the wheel as shown in Fig. 4 (a) are fed to the speed counter 12 through the AND gate 10 and the inverter 27, only for a given time T, during which the gate signal 101 from the timing pulse generating circuit 22 as shown in Fig. 4 (b) is indicated as "1" and the AND gate 10 is opened. At this time, the gate signal 101 is indicated as "1" in synchronism with the leading edge of the speed pulse 100 and changed to "0" after holding "1" for the given time T, whereby the AND gate 10 is opened in synchronism with the leading edge of the speed pulse 100, so that dispersions in the counted values due to the shift of the timing of the gate signal from the timing of the speed pulse can be avoided. Provided at the input side of the speed counter 12 is an inverter 27, which inverts the speed pulses 100 into signals shown in Fig. 4 (c), rises of the signals thus inverted, i.e., falls of the speed pulses 100 are counted by the speed counter 12, so that the decrease in the value counted by the speed counter 12 due to synchronizing the speed pulse 100 with the gate signal 101 can be avoided. After the gate signal 101 is changed to "0", the timing pulse generating circuit 22 feeds a latch signal 106 shown in Fig. 4 (d) to the AND gate 24. Concurrently, in the hysteresis processing circuit 18, a difference between the output signal 102 from the speed counter 12 and the value 103 latched in the indication register 14 is obtained, and, when this difference exceeds the reference value set by the digital reference circuit 32 or 34 in either plus or minus direction, the difference presence signal 104 is indicated as "1". This difference presence signal 104 is changed into a gate signal for the aforesaid latch signal 106 in the AND gate 24. Consequently, if "1" is fed from the timing pulse generating circuit 22 to the latch signal 106 when the difference presence signal 104 is "1", the output from the AND gate 24 is changed to "1", whereby the value latched in the indication register 14 is rewritten to a value commensurate to the output signal 102 (counted value) from the speed counter 12. On the other hand, when the difference between the output signal 102 from the speed counter 12 and the value 103 latched in the indication register 14 does not reach the reference value, the difference presence signal 104 remains indicated as "0", and, even if "1" is fed to the latch signal 106, the value latched in the indication register 14 is not renewed.

Consequently, when the difference between the output (counted value) from the speed counter 12 and the value latched in the indication register 14 does not reach the predetermined value set in the hysteresis processing circuit 18, e.g., ±1 km/h or ±1 mile (1.6 km)/h, the value latched in the indication register 14 is not uselessly changed, whereby the value indicated by the indicator 16 is held at a given value, so that the indication of the indicator 16 will not flicker during running of the vehicle at a constant speed. On the other hand, in the condition where the output from the speed counter 12 is considerable fluctuated during acceleration or deceleration, the value latched in the indication register 14 is rewritten from time to time, so that no problem occurs during acceleration or deceleration.

Meanwhile, the speed pulses 100 and the initial reference numeral 108 as the reset signal are fed to the time counter 52 of the zero indication discriminating circuit 20 through the OR gate 50, and the time counter 52, as shown in Fig. 4(f), is adapted to count the clock pulse signals 109 from the oscillator 76 of the timing pulse generating circuit 22 for each emitting interval of the speed pulses 100 as a time count. When the vehicle is brought into a very slow running condition or stopped condition and the time count counted by the time counter 52 exceeds a predetermined value 111 corresponding to a predetermined interval preset in the time counter 52 e.g., 0.28 sec., the time counter 52 counts up to issue an output signal 110 therefrom as shown in Fig. 4(g). The output signal 110 is inputted to the bistable multivibrator 54, whereby the zero indication signal 105 is issued from a Q terminal of the bistable multivibrator 54, as shown in Fig. 4(h), is indicated as "1" which is fed as the reset signal to the indication register 14 and the speed counter 12 through the OR gates 28 and 26, whereby the values latched in the indication register 14 and the speed counter 12 are forcibly turned to be zero. The reason why an output from the zero indication discriminating circuit 20 is fed to not only the indication register 14 but also the speed counter 12 here is to prevent the flickering of the indication caused by the difference between the values of the speed counter 12 and the indication register 14 during a very slow running condition. With the arrangement as described above, when the vehicle is brought into a stopped condition from a running condition, the value latched in the indication register 14 can be made zero and the value indicated by the indicator 16 can be made 0 km/h or 0 mile (0 km)/h immediately.

In a circuit arrangement without the zero indication discriminating circuit erroneous indications can result. For example, if a speed pulse 100 corresponding to more than 1 km/h or 1 mile (1.6 km)/h were fed immediately after the gate signal 101 was set at "1", and the vehicle was then instantly stopped, then the gate signal 101 indicated as "1" would be changed to "0", indicating a speed more than 1 km/h or 1 mile (1.6 km)/h. Further, when a "1" is fed to the latch signal 106 after the gate signal is changed from "1" to "0", then 0 km/h or 0 mile (0 km)/h is indicated.

With the arrangement as described above, the indicated value cannot become zero immediately after the vehicle is stopped, thereby presenting a feeling of incompatibility. Furthermore, by use of this zero indication discriminating circuit 20, such a disadvantage can be obviated that, when the vehicle is brought into the stopped condition from the running condition in spite of that the actual speed of the vehicle is zero, the value latched in the indication register 14 is not changed to zero because the actual speed is below the hysteresis processing circuit 18, and an indication other than zero remains steadily in the indicator 16.

On the other hand, "1" is fed from the AND gate 84 of the timing pulse generating circuit 22 to the latch signal 106, thereafter, "1" is fed from the AND gate 88 to the reset signal 107 as shown in Fig. 4(e), and the value of the speed counter 12 is reset to zero through the OR gate 26 so as to be ready for the speed pulse counting during the succeeding gate time. Consequently, when "1" is fed to the speed pulse 100 after "1" is fed to the reset signal 107, the gate signal 101 is synchronized with the rise of the speed pulse 100 by the timing pulse generating circuit 22 and indicated as "1" again.

In addition, since there is a possibility that the abovedescribed operation is not satisfactorily effected when the power source is turned on, initial resettings are effected by the initial reset signal 108 on the speed counter 12, the indication register 14, the time counter 52 and the bistable multivibrator 54 of the zero indication discriminating circuit 20, the bistable multivibrator 60 and the shift register 80 of the time pulse generating circuit 22 and the like thereby preventing the malfunction.

Fig. 5 shows the relationship between the actual speed of the vehicle and the indicated speed. In the drawing, the solid lines A show the relationship when the lowest bit of the indication register is "1" and the broken lines B show the relationship when the lowest bit of the indication register is "0". Further, a hatched region is the region of the indication 0 by the zero indication discriminating circuit. In both cases as described above, it is apparent that the indicated speed approaches the actual speed of the vehicle, whereby the steady error is decreased.

In the abovedescribed embodiment, the hysteresis processing circuit and the zero indication discriminating circuit are combinedly used, whereby the flickering of the indication during running of the vehicle at a constant speed can be more reliably prevented, and the indication is made zero instantly when the vehicle is stopped, thereby enabling to minimize the feeling of incompatibility. Needless to say, either one of the hysteresis processing circuit or the zero indication discriminating circuit may be omitted.

As has been described hereinabove, the present invention can offer such advantages that, while no steady offset is generated and the circuit arrangement is not complicated, the flickering of the indication during running of the vehicle at a constant speed is decreased and the error between the actual speed of the vehicle and the indicated speed is reduced.

From the foregoing description, it should be apparent to one skilled in the art the abovedescribed embodiment is but one of many possible specific embodiments which can represent the applications of the principles of the present invention. Numerous and varied other arrangements can be readily devised by those skilled in the art within the scope of the attached Claims.

## Claims

1. A digital indication type speedometer for digitally indicating a speed of a vehicle comprising:—

a gate circuit (10) which can be opened for a given gate time (T) at a predetermined time which is synchronized with a speed pulse (100) of a series of speed pulses, the frequency of which is proportional to the speed of the vehicle;

a repetitively counting speed counter (12), the output value of which at the end of each gate time (T) corresponds to the number of the speed pulses delivered within that gate time (T);

an indication register (14), connected to the output of the speed counter (12) for latching a value indicative of the vehicle speed;

a digital indicator (16) for displaying the value latched in the indication register (14);

characterised in that the gate circuit (10) is opened in synchronism with the leading edge of said speed pulse (100) and in that the trailing edges of the speed pulses (100) are counted by the said speed counter (12).

2. A digital indication type speedometer according to Claim 1 comprising:—

timing pulse generating circuit (22) for generating a gate signal (101) for opening the gate circuit (10) to pass said speed pulses (100), at said predetermined time; and an inverter (27) for inverting the speed pulses (100) passed by said gate circuit (100).

3. A digital indication type speedometer according to Claim 2, wherein said timing pulse generating circuit (22) generates for a short time sequentially after each gate signal (101) has terminated, a latch signal (106) to cause feeding of the value of the speed pulses counted by the speed counter (12) to the indication register (14), and a reset signal (107) for restoring the value of speed pulses counted by the speed counter (12) to zero.

4. A digital indication type speedometer according to Claim 3, wherein said timing pulse generating circuit (22) is adapted to emit an initial reference signal (108) for setting an initial reference value when the power is turned on.

5. A digital indication type speedometer according to any of Claims 1 to 4, further comprising: a hysteresis processing circuit (18) for driving the indication register (14) in such a way that, when the difference between the output value of the speed counter (12) at the end of each gate signal and the value latched in the indication register (14) is within a positive or negative threshold value, the content of the indication register (14) remains unchanged; when, on the other hand, said positive or negative value is exceeded, the output value of the counter (12) is transmitted to the indication register (14) so that the content is updated.

6. A digital indication type speedometer according to Claim 5, wherein said hysteresis processing circuit (18) includes:

a first digital reference circuit (32) for digitally presetting a positive hysteresis reference value corresponding to the positive threshold value;

a second digital reference circuit (34) for digitally presetting a negative hysteresis reference value corresponding to the negative threshold value;

a digital subtraction circuit (30) for calculating a difference in absolute terms between the output signal (102) from the speed counter (12) at the end of each gate signal and the value (103) latched in the indication register (14); and

comparison circuit means (85, 86) for comparing said positive and negative threshold values with an output from said digital subtraction circuit (30).

7. A digital indication type speedometer according to any of Claims 1 to 6, further comprising: a zero indication discriminating circuit (20) emitting a zero indication signal for forcibly setting the value latched in the indication register (14) and the content of the speed counter to zero when the time interval between two consecutive speed pulses exceeds a predetermined period of time.

8. A digital indication type speedometer according to Claim 7, wherein said zero indication discriminating circuit (20) includes:

an OR circuit (50) for emitting a logical sum between said speed pulse (100) and said initial reference signal (108);

a counter (52) for counting clock pulses (109) until it is reset by said OR circuit (50) and feeding an output signal (110) when the counted value by said time counter exceeds a predetermined value; and

a bistable multivibrator (54) for feeding a zero indication signal (105) upon receiving said output signal (110) from said counter.

## Revendications

1. Un tachymètre du type à affichage numérique pour indiquer numériquement la vitesse d'un véhicule, et comportant:

— un circuit de porte (10) susceptible d'être ouvert pendant un temps d'ouverture (T) donné à un moment prédéterminé qui est synchronisé avec l'une d'une série d'impulsions de vitesse (100) dont la fréquence est proportionnelle à la vitesse du véhicule;

— un compteur de vitesse (12) à comptage répétitif dont la valeur de sortie à la fin de chaque temps d'ouverture (T) correspond au nombre d'impulsions de vitesse fourniespendant ledit temps d'ouverture (T);

— un registre d'indication (14) relié à la sortie du compteur de vitesse (12) et appelé à retenir une valeur représentative de la vitesse du véhicule;

— un indicateur numérique (16) pour afficher la valeur retenue dans le registre d'indication (14);

caractérisé en ce que le circuit de porte (10) est ouvert en synchronisme avec le front avant de ladite impulsion de vitesse (100), et en ce que les queues arrière des impulsions de vitesse (100) sont comptées par ledit compteur de vitesse (12).

2. Un tachymètre du type à affichage numérique selon la revendication 1, comportant:

— un circuit générateur d'impulsions d'horloge (22) pour produire un signal de porte (101) afin d'ouvrir le circuit de porte (10) pour transmettre lesdites impulsions de vitesse (100), audit moment prédéterminé; ainsi qu'un inverseur (27) pour inverser les impulsions de vitesse (100) traversant ledit circuit de porte (100).

3. Un tachymètre du type à affichage numérique selon la revendication 2, dans lequel ledit circuit générateur d'impulsions d'horloge (22) produit, pendant un laps de temps court, de manière séquentielle, après la fin de chaque signal de porte (101), un signal de retenue (106) pour transmettre au registre d'indication (14) la valeur des impulsions de vitesse comptées par le compteur de vitesse (12), ainsi qu'un signal de remise à zéro (107) pour remettre la valeur des impulsions de vitesse comptées par le compteur de vitesse (12) à zéro.

4. Un tachymètre du type à affichage numérique selon la revendication 3, dans lequel ledit circuit générateur d'impulsions d'horloge (22) est agencé de manière à émettre un signal de référence initial (108) pour déterminer une valeur de référence initiale lorsque la source d'énegie est branchée.

5. Un tachymètre du type à affichage numérique selon une quelconque des revendications 1 à 4, comportant en outre: un circuit de traitement d'hystérésis (18) pour commander le registre d'indication (14) de façon telle que lorsque la différence entre la valeur de sortie du compteur de vitesse (12) à la fin de chaque signal de porte et la valeur retenue dans le registre d'indication (14) se situe à l'intérieur d'une valeur de seuil positive ou négative, le contenu du registre d'indication (14) reste inchangé, et que, par contre, lorque ladite valeur positive ou négative est dépassée, la valeur de sortie du compteur (12) soit transmise au registre d'indication (14) en vue de l'adaptation du contenu.

6. Un tachymètre du type à affichage numérique selon la revendication 5, dans lequel ledit circuit de traitement d'hystérésis (18) comprend:

— un premier circuit de référence numérique (32) appelé à préafficher numériquement une valeur positive de référence d'hystérésis correspondant à la valeur de seuil positive;

— un second circuit de référence numérique (34) pour préafficher numériquement une valeur négative de référence d'hystérésis correspondant à la valeur de seuil négative;

— un circuit de soustraction numérique (30) pour calculer en termes absolus une différence entre le signal de sortie (102) du compteur de vitesse (12) et la valeur (103) retenue dans le registre d'indication (14); et

— des moyens de circuit de comparaison (85, 86) pour comparer lesdites valeurs de seuil positive et négative à un signal de sortie dudit circuit de soustraction numérique (30).

7. Un tachymètre du type à affichage numérique selon l'une quelconque des revendications 1 à 6, comportant en outre: un circuit discriminateur d'indication zéro (20) émettant un signal indicateur de zéro afin de remettre obligatoirement à zéro la valeur retenue dans le registre d'indication (14) et le contenu du compteur de vitesse lorsque l'intervalle de temps entre deux impulsions de vitesse successives dépasse une durée prédéterminée.

8. Un tachymètre du type à affichage numérique selon la revendication 7, dans lequel ledit circuit discriminateur d'indication de zéro (20) comprend:

— un circuit OU (50) pour émettre une somme logique entre ladite impulsion de vitesse (100) et ledit signal de référence initiale (108);

— un compteur (52) appelé à compter des impulsions d'horloge (109) jusqu'à ce qu'il soit remis à zéro par ledit circuit OU (50), et à transmettre un signal de sortie (110) lorsque la valeur comptée par ledit compteur de temps dépasse une valeur prédéterminée; et

— un multivibrateur bistable (54) pour transmettre un signal indicateur de zéro (105) après avoir reçu ledit signal de sortie (110) dudit compteur.

**Patentansprüche**

1. Digitalanzeige-Tachometer zum digitalen Anzeigen einer Fahrzeuggeschwindigkeit mit einer Torschaltung (10), die zu einem bestimmten Zeitpunkt, der mit einem Geschwindigkeitsimpuls (100) aus einer Folge von Geschwindigkeitsimpulsen, deren Frequenz zu der Fahrzeuggeschwindigkeit proportional ist, für eine vorgegebene Torzeit (T) geöffnet werden kann, einem wiederholt zählenden Geschwindigkeitszähler (12), dessen Ausgangswert am Ende einer jeden Torzeit (T) der Anzahl der innerhalb der Torzeit (T) zugeführten Geschwindigkeitsimpulse entspricht, einem Anzeigeregister (14), sas zur Zwischenspeicherung eines die Fahrzeuggeschwindigkeit anzeigenden Werts an den Ausgang des Geschwindigkeitszählers (12) angeschlossen ist, und einer digitalen Anzeigevorrichtung (16) zur Anzeige des in dem Anzeigeregister (14) zwischengespeicherten Werts, dadurch gekennzeichnet, daß die Torschaltung (10) synchron mit der Vorderflanke des Geschwindigkeitsimpulses (100) geöffnet wird und daß mittels des Geschwindigkeitszählers (12) die Rückflanken der Geschwindigkeitsimpulse (100) gezählt werden.

2. Digitalanzeige-Tachometer nach Anspruch 1, gekennzeichnet durch eine Zeitimpulsgeberschaltung (22) zum Erzeugen eines Torsignals (101) zum Öffnen der Torschaltung (10) zu dem bestimmten Zeitpunkt für das Durchlassen der Geschwindigkeitsimpulse (100) und einen Inverter (27) zum Invertieren der von der Torschaltung (10) durchgelassenen Geschwindigkeitsimpulse.

3. Digitalanzeige-Tachometer nach Anspruch 2, dadurch gekennzeichnet, daß die Zeitimpulsgeberschaltung (22) für eine kurze Zeit auf das Ende eines jeden Torsignals (101) folgend ein Zwischenspeicherungssignal (106), das das Zuführen des mittels des Geschwindigkeitszählers (12) gezählten Werts der Geschwindigkeitsimpulse zu dem Anzeigeregister (14) bewrikt, und ein Rücksetzsignal (107) zum Zurückstellen des mittels des Geschwindigkeitszählers (12) gezählten Werts der Geschwindigkeitsimpulse auf "Null" erzeugt.

4. Digitalanzeige-Tachometer nach Anspruch 3, dadurch gekennzeichnet, daß die Zeitimpulsgeberschaltung (22) zur Abgabe eines Anfangsbezugssignals (108) für das Einstellen eines Anfangsbezugswerts bei dem Einschalten der Stromversorgung ausgebildet ist.

5. Digitalanzeige-Tachometer nach einem der Ansprüche 1 bis 4, gekennzeichnet durch eine Hystereseverarbeitungsschaltung (18) zum Ansteuern des Anzeigeregisters (14) in der Weise, daß dann, wenn die Differenz zwischen dem Ausgangswert des Geschwindigkeitszählers (12) am Ende eines jeweiligen Torsignals und dem in dem Anzeigeregister (14) zwischengespeicherten Wert innerhalb eines positiven oder negativen Schwellenwerts liegt, der Inhalt des Anzeigeregisters (14) unverändert bleibt, oder andererseits dann, wenn der positive oder negative Wert überschritten ̄ wird, der Ausgangswert des Geschwindigkeitszählers (12) zu dem Anzeigeregister (14) übertragen wird, so daß der Inhalt aufgefrischt wird.

6. Digitalanzeige-Tachometer nach Anspruch 5, dadurch gekennzeichnet, daß die Hystereseverarbeitungsschaltung (18) eine erste digitale Bezugsschaltung (32) zur digitalen Voreinstellung eines dem positiven Schwellenwert entsprechenden positiven Hysteresebezugswert, eine zweite digitale Bezugsschaltung (34) zur digitalen Voreinstellung eines dem negativen Schwellenwert entsprechenden negativen Hysteresebezugswerts, eine digitale Substraktionsschaltung (30) zum Berechnen einer als Absolutwert ausgedrückten Differenz zwischen dem Ausgangssignal (102) des Geschwindigkeitszählers (12) am Ende eines jeweiligen Torsignals und dem in dem Anzeigeregister (14) zwischengespeicherten Wert (103) und eine Vergleichsschaltungseinrichtung (85, 86) zum Vergleichen des positiven und negativen Schwellenwerts mit einem Ausgangssignal der digitalen Substraktionsschaltung (30) aufweist.

7. Digitalanzeige-Tachometer nach einem der Ansprüche 1 bis 6, gekennzeichnet durch eine Nullanzeige-Diskriminatorschaltung (20) zur Abgabe eines Nullanzeigesignals für die zwangsweise Einstellung des in dem Anzeigeregister (14) zwischengespeicherten Werts und des Inhalts des Geschwindigkeitszählers auf "Null" dann, wenn der Zeitintervall zwischen zwei aufeinanderfolgenden Geschwindigkeitsimpulsen eine vorbestimmte Zeitdauer übersteigt.

8. Digitalanzeige-Tachometer nach Anspruch 7, dadurch gekennzeichnet, daß die Nullanzeige-Diskriminatorschaltung (20) eine ODER-Schaltung (50) zur Abgabe der logischen Summe aus dem Geschwindigkeitsimpuls (100) und dem Anfangsbezugsignal (108), einen Zähler (52), der bis zu seinem Rücksetzen mittels der ODER-Schaltung (50) Taktimpulse (109) zählt und ein Ausgangssignal (110) abgibt, wenn der Zählwert bei dieser Zeitzählung einen vorbestimmten Wert übersteigt, und eine bistabile Kippstufe (54) zur Abgabe des Nullanzeigesignals (105) auf den Empfang des Ausgangssignals (110) des Zählers hin aufweist.

# F I G. I

# F I G. 5

# F I G . 2

# F I G.3

VEHICLE SPEED COUNTER

INDICATION REGISTER

DIFFERENCE PRESENCE
SIGNAL

# F I G.4

(a) VEHICLE SPEED PULSE

(b) GATE SIGNAL

(c) VEHICLE SPEED COUNTER
    INPUT SIGNAL

(d) LATCH SIGNAL

(e) RESET SIGNAL

(f) TIME COUNTER VALUE

(g) TIME COUNTER OUTPUT
    SIGNAL

(h) ZERO INDICATING SIGNAL

0 042 691